# EUROPEAN PATENT SPECIFICATION

(11) **EP 1 647 687 B1**
(45) Date of publication and mention of the grant of the patent: **17.10.2007**
(21) Application number: 05016819.4
(22) Date of filing: 02.08.2005
(51) Int. Cl.: F02D 41/02

(54) **Diesel engine with particulate filter regeneration control**
Dieselmotor mit Steuerung der Partikelfilterregeneration
Moteur Diesel avec commande de régénération d'un filtre à particules

(30) Priority: 30.09.2004 JP 2004286952
(43) Date of publication of application: 19.04.2006
(73) Proprietor: Mazda Motor Corporation, Aki-gun Hiroshima 735-8670 (JP)
(72) Inventor: Nakai, Eiji, Aki-gun Hiroshima 735-8670 (JP); Morinaga, Shinichi, Aki-gun Hiroshima 735-8670 (JP); Sahara, Masanori, Aki-gun Hiroshima 735-8670 (JP)
(74) Representative: Laufhütte, Dieter

(56) References cited:
- EP-A- 1 172 537
- FR-A- 2 829 798
- US-A- 5 067 973
- PATENT ABSTRACTS OF JAPAN vol. 1996, no. 06, 28 June 1996 (1996-06-28) & JP 08 042326 A (HINO MOTORS LTD), 13 February 1996 (1996-02-13)

## Description

### TECHNICAL FIELD

The present invention relates to a diesel engine, and more particularly to a diesel engine employing diesel-smoke purification means which has a catalytic function and a diesel-particulate trapping function.

### BACKGROUND ART

Exhaust gas from a diesel engine contains diesel smoke due to free carbons produced during combustion. For the purpose of trapping particulates in the diesel smoke, a diesel engine exhaust system is provided with diesel-smoke purification means having a catalytic function and a function of trapping particulates in the diesel smoke (diesel-particulate trapping function). As a technique for regenerating the diesel-smoke purification means, there has been known one type designed to supply unburned fuel to an exhaust system at a given timing and burn the fuel by oxidation based on the catalytic function of the diesel-smoke purification means, so as to regenerate the diesel-smoke purification means through the use of the resulting heat, as disclosed, for example, in Japanese Patent Laid-Open Publication No. 08-042326.

### SUMMARY OF THE INVENTION

In the above technique designed to regenerate the diesel-smoke purification means using unburned fuel supplied to an exhaust system, if the diesel-smoke purification means has a lowered catalytic activity, fuel supplied during an after-injection will be undesirably emitted to the atmosphere in its unburned state.

In view of this problem, it is therefore an object of the present invention to provide a diesel engine capable of preventing unburned fuel from being emitted to the downstream side of the diesel-smoke purification means, while suppressing deterioration in fuel consumption.

In order to achieve this object, the present invention provides a diesel engine according to appended claim 1, including an exhaust system provided with diesel-smoke purification means having a catalytic function and a diesel-particulate trapping function, an engine body adapted to be in fluid communication with the diesel-smoke purification means to discharge exhaust gas thereto, a fuel injection device provided in each of a plurality of cylinders of the engine body, fuel injection control means for controlling at least a fuel injection quantity and a fuel injection timing of the fuel injection device, trapped-quantity detection means for detecting a quantity of diesel particulates trapped by the diesel-smoke purification means, and regeneration means for regenerating the diesel-particulate trapping function of the diesel-smoke purification means. The regeneration instruction means is operable, when the quantity of trapped diesel particulates detected by the trapped-quantity detection means is equal to or greater than a predetermined regeneration initiation threshold, to instruct the fuel injection control means to perform an after-injection for injecting fuel from the fuel injection device during a period between expansion and exhaust strokes so as to supply unburned fuel to the exhaust system. The diesel engine is characterized by comprising oxygen concentration detection means for detecting an oxygen concentration of exhaust gas on the downstream side of the diesel-smoke purification means. In the diesel engine, the regeneration instruction means includes an activity level determination section for determining an activity level of the catalytic function in accordance with comparison between a predetermined critical oxygen concentration and the oxygen concentration detected by the oxygen concentration detection means, and an inhibition section for selectively inhibiting the regeneration depending on the determination of the activity level determination section.

According to the diesel engine of the present invention, in the operation of the regeneration means for regenerating the diesel-smoke purification means in accordance with the quantity of trapped diesel particulates detected by the trapped-quantity detection means, the oxygen concentration detection means firstly detects an oxygen concentration of exhaust gas on the downstream side of the diesel-smoke purification means. Then, the activity level determination section of the regeneration means compares the oxygen concentration detected by the oxygen concentration detection means with the predetermined critical oxygen concentration to determine an activity level of the catalytic function in the diesel-smoke purification means in accordance with the comparison result. In response to a given determination of the activity level determination section, the inhibition section inhibits the regeneration. Thus, the regeneration can be avoided when the diesel-smoke purification means is insufficient in regeneration ability. This provides a significant advantage of being able to prevent unburned fuel from being emitted to the downstream side of the diesel-smoke purification means, while suppressing deterioration in fuel consumption.

In the diesel engine of the present invention, the diesel-smoke purification means may include a particulate filter for carrying out at least the diesel-particulate trapping function, and an oxidation catalyst disposed on the upstream side of the particulate filter to carry out the catalytic function. Preferably, the particulate filter is a catalyst-coated type. If the catalyst-coated particulate filter is used, the oxidation catalyst may be omitted.

In the diesel engine of the present invention, the activity level determination section determines that said catalytic function is in inactive state when the oxygen concentration detected by said oxygen concentration detection means falls below said critical oxygen concentration and thereby said inhibition section is operable to inhibit said regeneration in response to said determination of said activity level determination section. In this case, when the catalytic function is in the inactive state, the inhibition section can inhibit the regeneration or the fuel supply based on the after-injection, so as to reliably prevent the emission of unburned fuel.

Further, the activity level determination section determines that said catalytic function is in active state when the oxygen concentration detected by said oxygen concentration detection means becomes equal to or greater than a predetermined resuming oxygen concentration, that is set to be greater than said critical oxygen concentration and thereby said inhibition section is operable to release the inhibit state of said regeneration in response to said determination of said activity level determination section. In this case, the regeneration can be resumed just after the catalytic function goes to the active state according to increase in exhaust gas temperature or the like, so as to adequately regenerate the diesel-smoke purification means.

### BRIEF DESCRIPTION OF DRAWINGS

FIG. 1 is a schematic diagram showing a diesel engine according to one embodiment of the present invention.
FIG. 2 is a block diagram showing an electronic control unit (ECU) in the diesel engine illustrated in FIG. 1.
FIG. 3 is a graph showing a characteristic curve representing the relationship between a pressure difference and a trapped-particulate quantity, to be used for a control of regeneration means illustrated in FIG. 2.
FIG. 4 is a graph showing a characteristic curve representing the relationship between an oxygen concentration and a time, to be used for the control of the regeneration means illustrated in FIG. 2.
FIG. 5 is a flowchart of a filter regeneration process in the diesel engine illustrated in FIG. 1.
FIG. 6 is a flowchart of a subroutine for setting a warm-up reference value in the flowchart illustrated in FIG. 5.
FIG. 7 is a flowchart of a subroutine for determining the appropriateness for performing the regeneration of a particulate filter, in the flowchart illustrated in FIG. 5.

### DETAILED DESCRIPTION OF INVENTION:

With reference to the accompanying drawings, a preferred embodiment of the present invention will now be described.

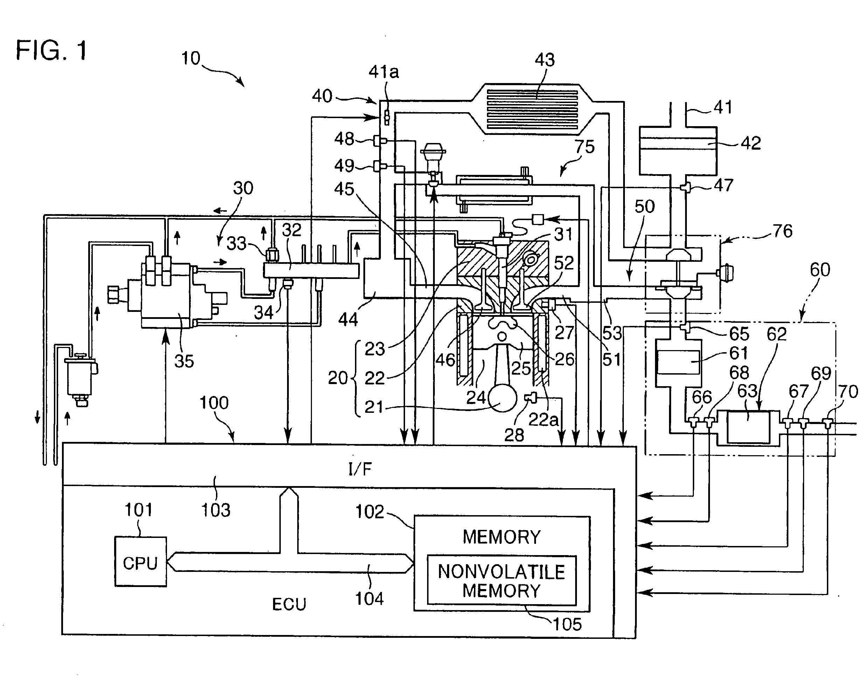

FIG. 1 is a schematic diagram showing a diesel engine 10 according one embodiment of the present invention.

Referring to FIG. 1, the illustrated diesel engine 10 has an engine body 20. The engine body 20 integrally includes a cylinder block 22 rotatably supporting a crankshaft 21, and a cylinder head 23 fixed to an upper portion of the cylinder block 22. The cylinder block 22 is formed with a water jacket 22a.

The cylinder block 22 has a plurality of cylinders 24. Each of the cylinders 24 is provided with a piston 25 connected to the crankshaft 21, and a combustion chamber 26 is defined in the cylinder 24 by the piston 25, as in a conventional manner. The cylinder block 22 of the engine body 20 is also provided with a coolant temperature sensor 27 for detecting a temperature of coolant in the water jacket 22a, and crank angle sensor 28 for detecting a rotational speed of the crankshaft 21.

The engine body 20 is associated with a common-rail fuel injection system 30 for injecting fuel into each of the combustion chambers 26. The common-rail fuel injection system 30 comprises a plurality of injectors 31 attached, respectively, to the combustion chambers 26 to inject fuel thereinto, a common rail 32 connected with the injectors 31, a pressure regulator 33 provided in the common rail 32, a fuel pressure sensor 34 for controlling the fuel pressure regulator 33, a high-pressure pump 35 connected to the common rail 32, and a fuel tank (not shown) for storing fuel to be injected from the injectors 31. While a further description of this common-rail fuel injection system 30 will be omitted because its detailed structure is fundamentally the same as that disclosed, for example, in the aforementioned Patent Publication 1, the common-rail fuel injection system 30 used in this embodiment is adapted to freely set a fuel injection timing and an injection pressure in each of the injectors 31.

The cylinders 24 of the engine body 20 are associated with an intake system 40 for supplying flesh air to each of the combustion chambers 26 in the cylinders 24, and an exhaust system 50 for discharging burned gas from each of the combustion chambers 26.

The intake system 40 has an intake passage 41 which includes an intake-air filter 42, an intercooler 43 disposed on the downstream side of the after-mentioned turbocharger 76, and a intake manifold 44, in this order from the upstream side. The flesh air from the intake manifold 44 is supplied into the cylinders 24 through a plurality of intake manifold branches 45 coupled to the corresponding combustion chambers 26. The reference numeral 41 a indicates a throttle valve disposed between the intercooler 43 and the intake manifold 44. The throttle valve 41 a is operable to control an intake-air quantity to be supplied to the intake manifold 44. Each of the intake manifold branches 45 is provided with an intake valve 46. The intake passage 41 also includes an intake-air quantity sensor 47 disposed at the downstream end of the intake-air filter 42, and an intake-air temperature sensor 48 and an intake-air pressure sensor 48 which are disposed between the intercooler 43 and the intake manifold 44.

The exhaust system 50 includes a plurality of exhaust manifold branches 51 coupled to the corresponding combustion chambers 26. Each of the exhaust manifold branches 51 is provided with an exhaust valve 52. The exhaust system 50 also includes an exhaust manifold 53 disposed on the downstream side of the exhaust manifold branches 51, and diesel-smoke purification means 60 disposed on the downstream side of the exhaust manifold 53.

The diesel-smoke purification means 60 has a catalytic function, and a diesel-particulate trapping function. Specifically, the diesel-smoke purification means 60 comprises an oxidation catalyst 61 for carrying out the catalytic function, and a particulate filter unit 62 disposed on the downstream side of the oxidation catalyst 61. In this embodiment, the particulate filter unit 62 includes a particulate filter 63 coated with a catalyst to carry out both the catalytic function and the diesel-particulate trapping function. The diesel-smoke purification means 60 is not limited to this combination, but may consist of only the particulate filter unit 62 or may be a combination of the oxidation catalyst 61 and a particulate filter unit including a particulate filter coated with no catalyst. The diesel-smoke purification means 60 includes an exhaust-gas temperature sensor 65 disposed on the upstream side of the oxidation catalyst 61, an exhaust-gas temperature sensor 66 disposed on the downstream side of the oxidation catalyst 61, an exhaust-gas temperature sensor 67 disposed on the downstream side of the particulate filter unit 62, an exhaust-gas pressure sensor 68 disposed on the upstream side of the particulate filter unit 62, an exhaust-gas pressure sensor 69 disposed on the downstream side of the particulate filter unit 62, and an oxygen concentration sensor 70 disposed on the downstream side of the particulate filter unit 62 to serve as oxygen concentration detection means.

Among these exhaust-gas pressure sensors, the exhaust-gas temperature sensor 66 in this embodiment serves as exhaust-gas temperature detection means for detecting a temperature of exhaust gas.
Each of the intake and exhaust valves 46, 52 in the intake and exhaust systems 40, 50 is designed to be driven by a valve control mechanism (not shown) under the control of the after-mentioned ECU 100, so as to open/close the corresponding intake or exhaust manifold branch 45, 51 at a given timing.

The illustrated diesel engine 10 includes an exhaust gas recirculation (EGR) system 75 and a turbocharger 76, which are provided between the intake system 40 and the exhaust system 50. Each of the EGR system 75 and the turbocharger 76 has the same structure as a conventional structure, and their detailed description will be omitted.

The diesel engine 10 has an ECU 100 for controlling each component thereof.

The ECU 100 comprises a central processing unit (CPU) 101, a memory 102, an input/output (I/O) interface 103, and a bus 104 electrically connecting between them.

The memory 102 includes a ROM for storing various programs and parameters for controlling the operation of the diesel engine 10, and a RAM serving as a memory area during data processing. In the illustrated embodiment, the memory 102 is provided with a nonvolatile memory 105, which is adapted to have a memory area for given data and/or parameters, so as to achieve the after-mentioned process.

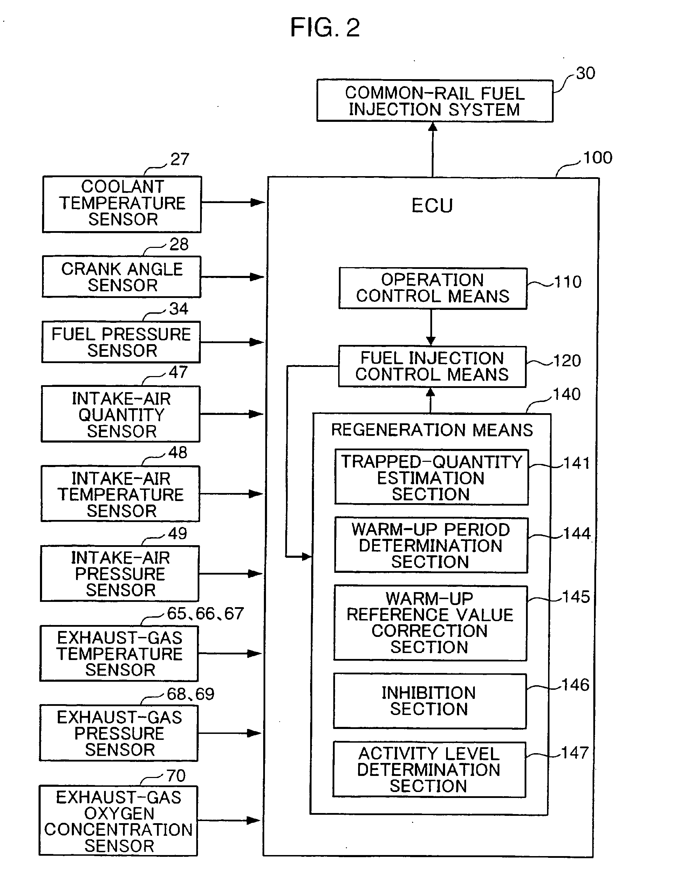

The I/O interface 103 is connected with: the coolant temperature sensor 27 and the crank angle sensor 28 which are provided in the engine body 20; the fuel pressure sensor 34 provided in the common rail 32 of the common-rail fuel injection system 30; the intake-air quantity sensor 47, the intake-air temperature sensor 48 and the intake-air pressure sensor 49 which are provided in the intake system 40; and the exhaust-gas temperature sensors 65, 66, 67, the exhaust-gas pressure sensors 68, 69 and the oxygen concentration sensor 70 which are provided in the diesel-smoke purification means 60 (see FIG. 2).

FIG. 2 is a block diagram of the ECU 100 in the diesel engine 10 illustrated in FIG. 1.

Referring to FIG. 2, the ECU 100 functionally comprises operation control means 110 for controlling the operation of the engine body 20, fuel injection control means 120 for controlling the common-rail fuel injection system 30, and regeneration means 140 for regenerating the diesel-particulate trapping function or the particulate filter 63 in the diesel-smoke purification means 60.

In order to operate the engine body 20, the operation control means 110 is operable to control a fuel injection quantity Q and a fuel injection timing in the common-rail fuel injection system 30, an opening of the throttle valve 41 a in the intake system 40, opening/closing timings of the intake and exhaust valves 46, 52, opening/closing operations of an EGR valve in the EGR system, etc.

Based on a control of an operation control means (not shown), the fuel injection control means 120 is operable, in response to receiving a detection signal from the fuel pressure sensor 34 in the common-rail fuel injection system 30, to control an injection timing and injection quantity of fuel to be injected from each of the injectors 31 of the common-rail fuel injection system 30.

Independently of the control of the operation control means, the regeneration means 140 is operable to drive the fuel injection control means 120 at a given timing in accordance with a value of a flag F set in a data memory area of the memory 102 so as to perform a fuel injection for regenerating the particulate filter 63 of the diesel-smoke purification means 60 (hereinafter referred to as "after-injection"). The regeneration means 140 functionally includes a trapped-quantity estimation section 141 for estimating a quantity M of diesel-particulates trapped in the particulate filter 63 (hereinafter referred to as "trapped-particulate quantity M" for brevity), a warm-up period determination section 144 for determining whether a warm-up period of the diesel engine 10 has passed, a warm-up reference value correction section 145 for correcting a warm-up reference value T_{std} serving as a criterion for the warm-up period determination section 144 according to a given condition, an inhibition section 146 for inhibiting the regeneration of the particulate filter under a given condition, and an activity level determination section 147 for calculating an oxygen concentration C of exhaust gas on the downstream side of the diesel-smoke purification means 60 and determining an activity level of the catalytic function of the diesel-smoke purification means 60.

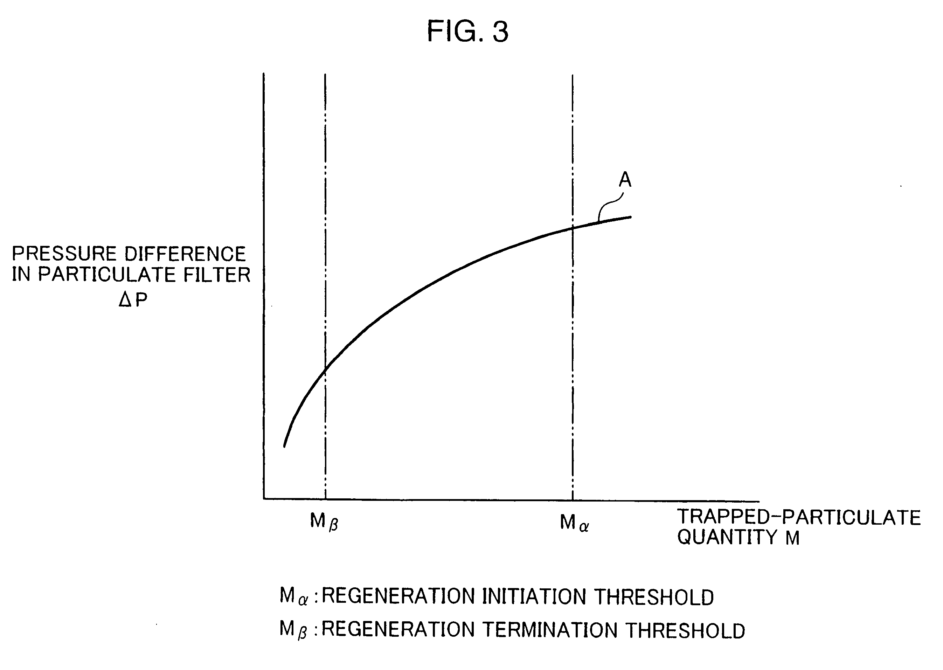

FIG. 3 is a graph showing a characteristic curve representing the relationship between a pressure difference and a trapped-particulate quantity, to be used for a control of the regeneration means 140 illustrated in FIG. 2.

Referring to FIG. 3, a trapped-particulate quantity M in the particulate filter 63 correlates with a difference ΔP between respective exhaust-gas pressures on the upstream and downstream sides of the particulate filter 63. In this embodiment, data about this correlation are experimentally accumulated to derive a characteristic curve A, and the characteristic curve A is registered on the memory 102 in the form of a map. Then, a regeneration initiation threshold M*α* and a regeneration termination threshold Mβ are set up, and a program for controlling the regeneration means 140 is configured to initiate the regeneration of the particulate filter 63 when the pressure difference ΔP becomes equal to or greater than regeneration initiation threshold M*α*, and the terminate the regeneration of the particulate filter 63 when the pressure difference ΔP becomes equal to or less than regeneration termination threshold Mβ.

The trapped-quantity estimation section 141 is operable to calculate a difference ΔP between respective exhaust-gas pressures on the upstream and downstream sides of the particulate filter 63, in accordance with detection signals from the exhaust-gas pressure sensors 68, 69, and estimate a trapped-particulate quantity M in the particulate filter 63, in accordance with the calculated pressure difference ΔP and the map pre-registered on the memory 102.

The warm-up period determination section 144 is operable to determine whether a count value T counted from start of the operation of the diesel engine 10 (lapsed time after the engine start) is equal to or greater than the predetermined warm-up reference value T_{std}. In the initial stage of the operation (or warm-up period) of the diesel engine, an excessive quantity of fuel relative to a catalytic activity of the particulate filter 63 is injected, and thereby unburned fuel remains in the particulate filter 63 in mist form. If the after-injection is performed in this state, the remaining unburned fuel and the after-injected fuel will causes excessive combustion with diesel particulates in the particulate filter 63. In order to avoid this problem, the warm-up period determination section 144 is operable to determine whether a period required for allowing the remaining unburnt fuel in the particulate filter 63 to be evaporated and released from the particulate filter 63 has passed. Then, the inhibition section 146 is operable to selectively inhibit the regeneration depending on the determination of the warm-up period determination section 144.

The warm-up reference value correction section 145 is operable to correct the warm-up reference value T_{std} according to a given condition so as to optimize the combustion of the after-injected fuel.

The inhibition section 146 is operable to update the filter regeneration flag F to "0 (zero)" according to a given control logic so as to inhibit the regeneration of the particulate filter 63.

The activity level determination section 147 is operable to calculate an oxygen concentration C of exhaust gas on the downstream side of the diesel-smoke purification means 60 in accordance with an output from the oxygen concentration sensor 70, and determine an activity level of the catalytic function of the diesel-smoke purification means 60, in accordance with the calculated oxygen concentration C and given thresholds C_{std1}, C_{std2} pre-stored on the memory 102.

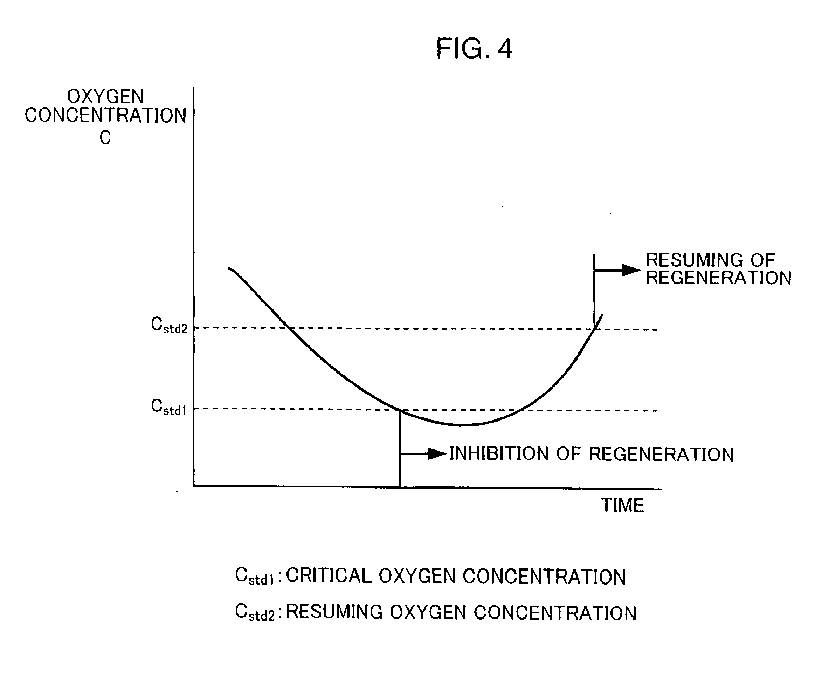

FIG. 4 is a graph showing a characteristic curve representing the relationship between an oxygen concentration and a time in the diesel engine according to this embodiment.

Referring to FIG. 4, it has been experimentally verified that the diesel-smoke purification means 60 almost loses the catalytic function when the oxygen concentration C falls below the given critical threshold (hereinafter referred to as "critical oxygen concentration") C_{std1}, and fulfills the catalytic function to react with fuel when the oxygen concentration C becomes equal to or greater than the given lower threshold (hereinafter referred to as "resuming oxygen concentration") C_{std2}. Thus, in this embodiment, the critical oxygen concentration C_{std1} and the resuming oxygen concentration C_{std2} are pre-stored as thresholds on the nonvolatile memory 105, and a program is configured to allow the activity level determination section 147 to determine an activity level of the catalytic function in accordance with the oxygen concentration C, and allow the inhibition section 146 to determine the appropriateness for performing the regeneration of the particulate filter 63 (hereinafter referred to occasionally as "filter regeneration" for brevity) in accordance with the determination of the activity level determination section 147, according to a process as shown in the after-mentioned flowcharts.

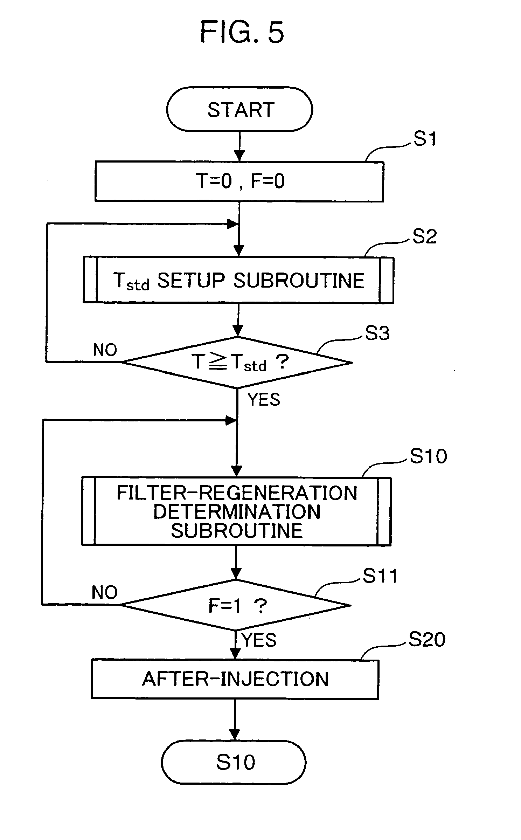

FIG. 5 is a flowchart of a filter regeneration process in the diesel engine illustrated in FIG. 1.

Referring to FIG. 5, upon start of the operation of the diesel engine 10, the ECU 100 initializes each of the count value T to be set to "0" at a time of the engine start, and the filter regeneration flag F, to "0", and stores the initialized values on the data memory area (Step S1).

Then, in this embodiment, the ECU 100 executes a T_{std} setup subroutine for setting the warm-up reference value T_{std} to be compared with the count value T (Step S2). In Step S2, the warm-up reference value T_{std} is determined. Through the execution of the T_{std} setup subroutine, the ECU 100 functionally serves as the warm-up reference value correction section 145 to allow the warm-up reference value T_{std} to be corrected to a suitable value for a current operational state of the diesel engine 10.

Then, the warm-up period determination section 144 of the ECU 100 compares the count value with the predetermined warm-up reference value T_{std}, and suspends the initiation of the filter regeneration until the count value becomes equal to or greater than the warm-up reference value T_{std} (Step S3). This Step S3 functionally serves as the inhibition section 146 for inhibiting the regeneration means 140 from performing the filter regeneration until the count value (lapsed time) T detected by the warm-up period determination section 144 reaches the predetermined warm-up reference value T_{std}, so as to prevent the regeneration from being excessively performed just after the engine start involving a large fuel injection quantity.

When the count value T reaches the warm-up reference value T_{std}, this main routine is shifted to a subroutine for determining the appropriateness for performing the filter regeneration (Step S10). In this filter-regeneration determination subroutine, it is determined whether the filter regeneration should be performed. If it is determined that the filter regeneration should be performed, the filter regeneration flag F will be updated to "1". Further, when the filter regeneration flag F set at "1" is reset to "0" under a given condition, the filter regeneration is inhibited regardless of the trapped-particulate quantity M.

After completion of the subroutine in Step S10, the filter regeneration flag F is referred to (Step S11). When the filter regeneration flag F is updated to "1", the after-injection is performed (Step S20), and then the process advances to Step S10. This after-injection is performed in such a manner that, after instructing the common-rail fuel injection system 30 to perform a fuel injection for operating the engine body 20, the ECU 100 re-drives the common-rail fuel injection system 30 to inject fuel from each of the injectors 31 during a period between expansion and exhaust strokes.

If the filter regeneration flag F is "0", the process will skip to Step S10 without performing the after-injection. Through the execution of Steps S1 to S20, the ECU 100 functionally serves as the regeneration means 140 or the inhibition section 146 of the regeneration means 140, to allow the after-injection to be performed at an appropriate timing so as to regenerate the particulate filter 63 of the diesel-smoke purification means 60.

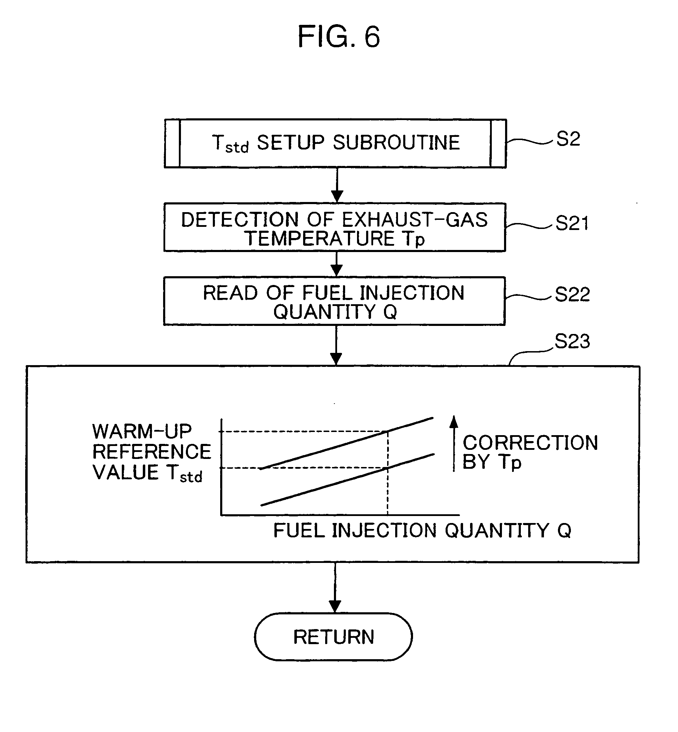

FIG. 6 is a flowchart of the T_{std} setup subroutine for setting the warm-up reference value T_{std}, in the flowchart illustrated in FIG. 5.

Referring to FIG. 6, when the process is shifted to the T_{std} setup subroutine, the ECU 100 firstly detects an exhaust-gas temperature Tp in accordance with an output from the exhaust-gas temperature sensor 66 (Step S21), and refers to a fuel injection quantity Q used for operating the engine body 20 (Step S22).

Then, based on a correction map stored on the memory 102, the warm-up reference value T_{std} is corrected to a longer period, as the fuel injection quantity Q has a larger value (Step S23). Thus, during an engine warm-up period where the fuel injection quantity Q is set at a relatively large value, the filter regeneration is inhibited, and the warm-up reference value T_{std} to be used for determining the engine warm-up period is corrected to a longer period in proportion to the fuel injection quantity Q. This makes it possible to more reliably prevent excessive combustion in the particulate filter 63 and suppress the deterioration in fuel consumption.

Further, the correction in Step S23 is associated with the exhaust-gas temperature Tp detected in Step S21 to correct the warm-up reference value T_{std} to a longer period, as the exhaust-gas temperature Tp has a small value, i.e. as the vaporization of unburned fuel remaining in the diesel-smoke purification means 60 becomes more difficult. Thus, the filter regeneration is also inhibited when exhaust gas has a low temperature causing a difficulty in inducing a catalytic reaction. This makes it possible to prevent unburned fuel from remaining in the diesel-smoke purification means 60 to cause the excessive combustion.

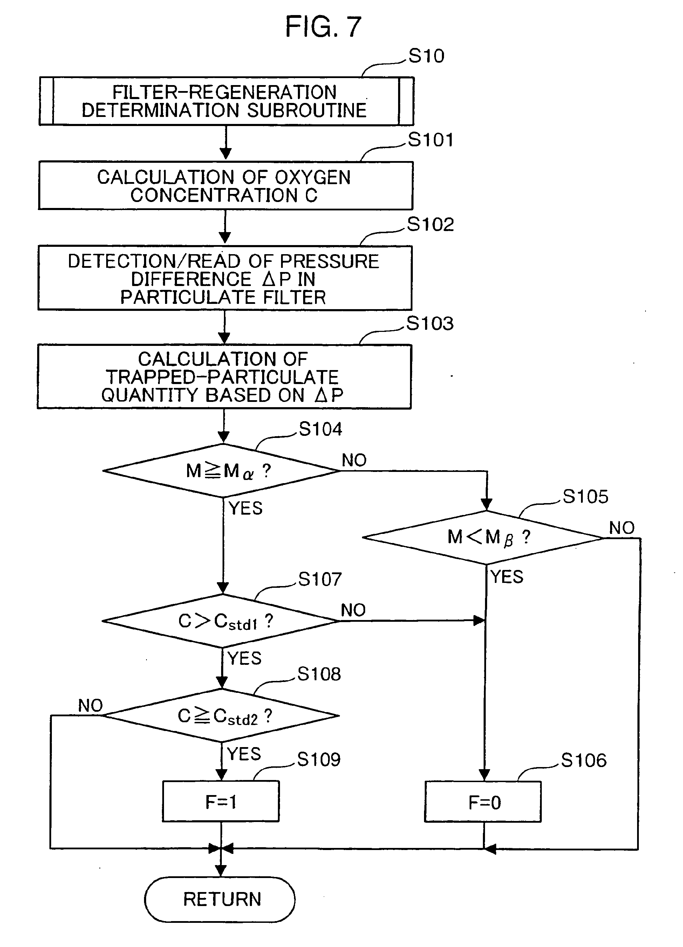

With reference to FIG. 7, the filter-regeneration determination subroutine of Step S10 in the main routine illustrated in FIG. 5 will be described below. FIG. 7 is a flowchart of the filter-regeneration determination subroutine.

Referring to FIG. 7, when the filter-regeneration determination subroutine is executed, the ECU 100 firstly calculates an oxygen concentration C in accordance with an output from the oxygen concentration sensor 70 (Step S101). Through Step S101, the ECU 100 functionally serves as the activity level determination section 147 capable of using the oxygen concentration C as one criterion.

Further, the ECU 100 calculates a difference ΔP between respective exhaust-gas pressures on the upstream and downstream sides of the particulate filter 63 in accordance with detection signals from the exhaust-gas pressure sensors 68, 69 (Step S102). Then, based on the calculated pressure difference ΔP, a trapped-particulate quantity M in the particulate filter 63 is estimated from the map prepared using the characteristic curve in FIG. 3 and pre-registered on the memory 102 (Step S103). Through Steps S102 and S103, the ECU 100 functionally serves as the trapped-quantity estimation section 141 capable of specifying the trapped-particulate quantity M in the particulate filter 63.

Then, based on a map prepared using the characteristic curve in FIG. 3, the ECU 100 determines whether the trapped-particulate quantity M estimated in Step S103 is equal to or greater than the regeneration initiation threshold M*α* (Step S104).

If the trapped-particulate quantity M is less than the regeneration initiation threshold M*α*, the trapped-particulate quantity M will be further compared with the regeneration termination threshold Mβ (Step S105). In Step S105, if the trapped-particulate quantity M is greater than the regeneration termination threshold Mβ, the process will return to the main routine without update of the filter regeneration flag F by the ECU 100. In this manner, the filter-regeneration determination subroutine will be repeatedly executed by the ECU 100, wherein the filter regeneration is repeatedly performed when the filter regeneration flag F is "1", and the filter regeneration is not initiated when the filter regeneration flag F is "0". Thus, in the state when the filter regeneration is not initiated, the filter regeneration will be performed only after the trapped-particulate quantity M reaches the regeneration initiation threshold M*α*. On the other hand, after the filter regeneration is initiated once, the filter regeneration will be continued until the trapped-particulate quantity M becomes equal to or less than the regeneration termination threshold Mβ.

In Step S104, when the trapped-particulate quantity M is equal to or greater than the regeneration initiation threshold M*α*, the ECU 100 reads the critical oxygen concentration C_{std1} from the nonvolatile memory 105, and compares the read critical oxygen concentration C_{std1} with the oxygen concentration C calculated in Step S101 (Step S107). In Step S107, when the oxygen concentration C is less than the critical oxygen concentration C_{std1}, the ECU 100 updates the filter regeneration flag F to "0", and process returns to the main routine. Thus, the ECU 100 functionally serves as the activity level determination section 147 and the inhibition section 146 to inhibit the filter regeneration when the oxygen concentration C is less than the critical oxygen concentration C_{std1}.

In Step S107, if the oxygen concentration C is equal to or greater than the critical oxygen concentration C_{std1}, the oxygen concentration C is further compared with the resuming oxygen concentration C_{std2} (Step S108).

In Step S108, when the oxygen concentration C is equal to or greater than the resuming oxygen concentration C_{std2}, the ECU 100 updates the filter regeneration flag F to "1", and then the process returns to the main routine. If the oxygen concentration C is less than the resuming oxygen concentration C_{std2}, the process will return to the main routine without update of the filter regeneration flag F by the ECU 100. In this manner, the filter-regeneration determination subroutine will be repeatedly executed, wherein the filter regeneration is repeatedly performed when the filter regeneration flag F is "1", and the filter regeneration is not initiated when the filter regeneration flag F is "0". Thus, in the state when the filter regeneration is not initiated, the filter regeneration will be performed only after the oxygen concentration C reaches the resuming oxygen concentration C_{std2}.

As mentioned above, according to this embodiment, in the operation of the regeneration means 140 for regenerating the diesel-smoke purification means 60 in accordance with the trapped-particulate quantity M detected by the exhaust-gas pressure sensors 68, 69 serving as trapped-quantity detection means, the oxygen concentration sensor 70 serving as oxygen concentration detection means firstly detects an oxygen concentration C of exhaust gas on the downstream side of the diesel-smoke purification means 60. Then, the activity level determination section of the regeneration means 140 compares the oxygen concentration C detected by the oxygen concentration sensor 70 with the predetermined the critical oxygen concentration C_{std1}, and determines an activity level of the catalytic function of the diesel-smoke purification means 60 in accordance with the comparison result. Then, the inhibition section 146 selectively inhibits the filter regeneration depending on the determination of the activity level determination section. This makes it possible to avoid the filter regeneration from being performed when the diesel-smoke purification means 60 is insufficient in regeneration ability.

In the above embodiment, if the oxygen concentration C falls below the predetermined critical oxygen concentration C_{std1}, the inhibition means 146 can inhibit the filter regeneration to preclude an after-injection-based fuel supply when the diesel-smoke purification means 60 is insufficient in regeneration ability, so as to reliably prevent the emission of unburned fuel. Preferably, the inhibition section 146 releases the inhibition of the filter regeneration, when the oxygen concentration C detected by the oxygen concentration sensor 70 becomes equal to or greater than the resuming oxygen concentration C_{std2} preset to be greater that the critical oxygen concentration C_{std1}. In this case, the filter regeneration can be resumed when the activity of the diesel-smoke purification means is increased up to a given level or more according to increase in exhaust gas temperature or the like, so as to adequately regenerate the diesel-smoke purification means 60.

In the above embodiment, the warm-up period determination section 144 measures a lapsed time after start of the engine body in accordance with the count value T, and the inhibition section 146 inhibits the regeneration means 140 from performing the filter regeneration until the count value (lapsed time)T reaches the reference value T_{std} serving as a predetermined warm-up period. This makes it possible to avoid the filter regeneration from being excessively performed just after the engine start involving a large fuel injection quantity.

In the above embodiment, the regeneration means 140 includes the warm-up reference value correction section 145 for correcting the warm-up reference value T_{std} to a longer period, as a fuel injection quantity for the engine operation has a larger value. Thus, the warm-up reference value T_{std} can be corrected to a longer period using the fuel injection quantity for the engine operation as a parameter, and based on the fuel injection quantity.

In the above embodiment, the exhaust-gas temperature 66 is further provided as exhaust-gas temperature detection means for detecting a temperature of exhaust gas from the engine body, and the warm-up reference value correction section 145 of the regeneration means 140 corrects the warm-up reference value T_{std} to a longer period, as the exhaust-gas temperature detected by the exhaust-gas temperature detection means has a larger value. Thus, the warm-up reference value T_{std} can be corrected using the exhaust-gas temperature as a parameter, and based on the fuel injection quantity.

Further, the filter regeneration according to the regeneration means 140 can be inhibited until the predetermined warm-up reference value T_{std} passes. This makes it possible to avoid the filter regeneration from being excessively performed just after the engine start involving a large fuel injection quantity so as to prevent excessive increase in temperature of the diesel-smoke purification means during the engine worm-up period.

Thus, the diesel engine according to the above embodiment has a significant advantage of being able to avoid the filter regeneration from being performed when the diesel-smoke purification means 60 is insufficient in regeneration ability, so as to prevent the emission of unburned fuel to the downstream side of the diesel-smoke purification means 60 and suppress the deterioration in fuel consumption.

It will be understood by those skilled in the art that various changes and modifications may be made without departing from the scope of the present invention as set forth in appended claims.

## Claims

1. A diesel engine (10) including:
a diesel-smoke purification means (60) having a catalytic function and a diesel-particulate trapping function;
an engine body (20) adapted to be in fluid communication with said diesel-smoke purification means (60) to discharge exhaust gas thereto;
a fuel injection device (31) provided in each of a plurality of cylinders of said engine body;
fuel injection control means (120) for controlling at least a fuel injection quantity and a fuel injection timing of said fuel injection device;
trapped-quantity detection means (141) for detecting a quantity of diesel particulates trapped by said diesel-smoke purification means; and
regeneration means (140) for regenerating the diesel-particulate trapping function of said diesel-smoke purification means (60), said regeneration means being operable, when the quantity of trapped diesel particulates detected by said trapped-quantity detection means is equal to or greater than a predetermined regeneration initiation threshold, to instruct said fuel injection control means (120) to perform an after-injection for injecting fuel from said fuel injection device during a period between expansion and exhaust strokes so as to supply unburned fuel to the exhaust system,
said diesel engine (10) being **characterized by** comprising:
oxygen concentration detection means (70) for detecting an oxygen concentration of exhaust gas on the downstream side of said diesel-smoke purification means (60),
wherein said regeneration means (140) includes:
an activity level determination section (147) for determining an activity level of said catalytic function in accordance with comparison between a predetermined critical oxygen concentration (Cstd1) and the oxygen concentration detected by said oxygen concentration detection means (70); and
an inhibition section (146) for selectively inhibiting said regeneration depending on the determination of said activity level determination section (147).

2. The diesel engine as defined in claim 1, wherein said diesel-smoke purification means (60) includes a particulate filter (63) for carrying out at least said diesel-particulate trapping function, and an oxidation catalyst disposed on the upstream side of said particulate filter to carry out said catalytic function.

3. The diesel engine as defined in claim 1 or 2, wherein said activity level determination section (147) determines that said catalytic function is in inactive state when the oxygen concentration detected by said oxygen concentration detection means (70) falls below said critical oxygen concentration (C_{std1}) and thereby said inhibition section (146) is operable to inhibit said regeneration in response to said determination of said activity level determination section (147).

4. The diesel engine as defined in claim 3, wherein said activity level determination section (147) determines that said catalytic function is in active state when the oxygen concentration detected by said oxygen concentration detection means (70) becomes equal to or greater than a predetermined resuming oxygen concentration (C_{std2}), that is set to be greater than said critical oxygen concentration (C_{std1}) and thereby said inhibition section (146) is operable to release the inhibit state of said regeneration in response to said determination of said activity level determination section (147).

## Patentansprüche

1. Dieselmotor (10), umfassend
ein Mittel zur Dieselrauchreinigung (60), das eine Katalysefunktion und eine Funktion zum Abscheiden von Dieselpartikeln aufweist;
einen Motorkörper (20), der so angepasst ist, dass er über ein Fluid mit dem Mittel zur Dieselrauchreinigung (60) in Verbindung steht, um Abgas an dieses abzugeben;
eine Kraftstoffeinspritzvorrichtung (31) die in jedem einer Vielzahl von Zylindern des Motorkörpers vorgesehen ist;
Mittel zur Steuerung der Kraftstoffeinspritzung (120) zum Steuern zumindest einer Kraftstoffeinspritzmenge und einer Zeitsteuerung für die Kraftstoffeinspritzung der Kraftstoffeinspritzvorrichtung;
Erkennungsmittel für die abgeschiedene Menge (141) zum Erkennen einer Menge von Dieselpartikeln, die von dem Mittel zur Dieselrauchreinigung abgeschieden wurden; und
Regenerationsmittel (140) zum Regenerieren der Funktion zum Abscheiden von Dieselpartikeln des Mittels zur Dieselrauchreinigung (60), wobei das Regenerationsmittel dahingehend betriebsfähig ist, dass es, wenn die Menge der abgeschiedenen Dieselpartikel, die von dem Erkennungsmittel für die abgeschiedene Menge erkannt wurde, gleich oder größer als ein vorbestimmter Schwellenwert zur Einleitung der Regeneration ist, das Mittel zur Steuerung der Kraftstoffeinspritzung (120) anweist, eine Nacheinspritzung durchzuführen, um während eines Zeitraums zwischen Arbeitshub und Auspuffhub Kraftstoff aus der Kraftstoffeinspritzvorrichtung einzuspritzen, damit dem Abgassystem unverbrannter Kraftstoff zugeführt wird,
wobei der Dieselmotor (10) **dadurch gekennzeichnet ist, dass** er Folgendes umfasst:
Sauerstoffkonzentrations-Erkennungsmittel (70) zum Erkennen einer Abgas-Sauerstoffkonzentration auf der dem Mittel zur Dieselrauchreinigung (60) nachgelagerten Seite,
wobei das Regenerationsmittel (140) Folgendes umfasst:
einen Aktivitätsstufen-Bestimmungsabschnitt (147) zum Bestimmen einer Aktivitätsstufe der Katalysefunktion in Übereinstimmung mit dem Vergleich zwischen einer vorbestimmten kritischen Sauerstoffkonzentration (Cstd1) und der von dem Sauerstoffkonzentrations-Erkennungsmittel (70) erkannten Sauerstoffkonzentration; und
einen Hemmabschnitt (146) zum selektiven Hemmen der Regeneration, abhängig von der Bestimmung durch den Aktivitätsstufen-Bestimmungsabschnitt (147).

2. Dieselmotor nach Anspruch 1, wobei das Mittel zur Dieselrauchreinigung (60) einen Partikelfilter (63) zum Durchführen zumindest der Funktion zum Abscheiden von Dieselpartikeln umfasst, und einen Oxidationskatalysator, der auf der dem Partikelfilter vorgelagerten Seite angeordnet ist, um die Katalysefunktion durchzuführen.

3. Dieselmotor nach Anspruch 1 oder 2, wobei der Aktivitätsstufen-Bestimmungsabschnitt (147) bestimmt, dass die Katalysefunktion sich in einem inaktiven Zustand befindet, wenn die durch das Sauerstoffkonzentrations-Erkennungsmittel (70) erkannte Sauerstoffkonzentration unter die kritische Sauerstoffkonzentration (C_{std1}) fällt und **dadurch** der Hemmabschnitt (146) dahingehend betriebsfähig ist, dass er die Regeneration als Reaktion auf die Bestimmung durch den Aktivitätsstufen-Bestimmungsabschnitt (147) hemmt.

4. Dieselmotor nach Anspruch 3, wobei der Aktivitätsstufen-Bestimmungsabschnitt (147) bestimmt, dass die Katalysefunktion sich in einem aktiven Zustand befindet, wenn die durch das Sauerstoffkonzentrations-Erkennungsmittel (70) erkannte Sauerstoffkonzentration gleich oder größer als eine vorbestimmte Sauerstoffkonzentration zur Wiederaufnahme (C_{std2}) wird, die so eingestellt ist, dass sie größer als die kritische Sauerstoffkonzentration (C_{std1}) ist und **dadurch** der Hemmabschnitt (146) dahingehend betriebsfähig ist, dass er den Hemmzustand der Regeneration als Reaktion auf die Bestimmung durch den Aktivitätsstufen-Bestimmungsabschnitt (147) freigibt.

## Revendications

1. Moteur Diesel (10), comprenant
un moyen de purification des fumées Diesel (60) comportant une fonction catalytique et une fonction de piégeage des particules Diesel;
un corps de moteur (20) qui est adapté de manière à être en communication fluide avec ledit moyen de purification des fumées Diesel (60) afin de décharger des gaz d'échappement dans celui-ci;
un dispositif d'injection de carburant (31) qui est prévu dans chacun des cylindres dudit corps de moteur;
un moyen de commande de l'injection du carburant (120) destiné à commander au moins une quantité d'injection du carburant et une temporisation de l'injection de carburant dudit dispositif d'injection de carburant;
un moyen de détection de la quantité piégée (141) destiné à détecter la quantité piégée par ledit moyen de purification des fumées Diesel ; et
un moyen de régénération (140) destiné à régénérer la fonction de piégeage des particules Diesel dudit moyen de purification des fumées Diesel (60), ledit moyen de régénération pouvant fonctionner de telle manière qu'il commande, lorsque la quantité des particules piégées détectée par ledit moyen de détection de la quantité piégée est égale ou supérieure à un seuil d'initiation de la régénération prédéterminé, ledit moyen de commande de l'injection du carburant (120) afin qu'il effectue une post-injection pour injecter du carburant provenant dudit dispositif d'injection de carburant pendant une période entre la course d'expansion et la course d'échappement afin de fournir du carburant non brûlé au système d'échappement,
ledit moteur Diesel (10) étant **caractérisé en ce qu'**il comprend:
un moyen de détection de la concentration d'oxygène (70) destiné à détecter une concentration d'oxygène dans des gaz d'échappement en aval dudit moyen de purification des fumées Diesel (60),
ledit moyen de régénération (140) comportant:
une partie de détermination du niveau d'activité (147) destinée à déterminer le niveau d'activité de ladite fonction catalytique selon une comparaison entre une concentration d'oxygène critique prédéterminée (Cstd1) et la concentration d'oxygène détectée par ledit moyen de détection de la concentration d'oxygène (70); et
une partie d'inhibition (146) destinée à inhiber de manière sélective ladite régénération, suivant la détermination de ladite partie de détermination du niveau d'activité (147).

2. Moteur Diesel selon la revendication 1, ledit moyen de purification des fumées Diesel (60) comportant un filtre à particules (63) destiné à effectuer au moins ladite fonction de piégeage des particules Diesel et un convertisseur catalytique à oxydation disposé en amont dudit filtre à particules afin d'effectuer ladite fonction catalytique.

3. Moteur Diesel selon la revendication 1 ou 2, **caractérisé en ce que** ladite partie de détermination du niveau d'activité (147) détermine que la fonction catalytique est dans un état inactif lorsque la concentration d'oxygène détectée par ledit moyen de détection de la concentration d'oxygène (70) chute en dessous de ladite concentration d'oxygène critique (C_{std1}) et de ce fait, ladite partie d'inhibition (146) peut fonctionner de manière à inhiber ladite régénération en réponse à ladite détermination de ladite partie de détermination du niveau d'activité (147).

4. Moteur Diesel selon la revendication 3, **caractérisé en ce que** ladite partie de détermination du niveau d'activité (147) détermine que la fonction catalytique est dans un état actif lorsque la concentration d'oxygène détectée par ledit moyen de détection de la concentration d'oxygène (70) devient égale à ou bien supérieure à une concentration d'oxygène de reprise prédéterminée (C_{std2}) et ainsi ladite partie d'inhibition (146) peut fonctionner de manière à débloquer l'état d'inhibition de ladite régénération en réponse à ladite détermination effectuée par ladite partie de détermination du niveau d'activité (147).
